# EUROPÄISCHE PATENTANMELDUNG

(11) **EP 4 219 209 A1**
(43) Veröffentlichungstag der Anmeldung: **02.08.2023**
(21) Anmeldenummer: 22183220.7
(22) Anmeldetag: 06.07.2022
(51) Int. Cl.: B60K 26/02, G05G 1/38

(54) **FAHRPEDAL MIT EINEM DREHSTELLUNGSSENSOR MIT EINER SENSORDREHACHSE UND EINEM SCHWENKBAREN BETÄTIGUNGSELEMENT MIT EINER BETÄTIGUNGSDREHACHSE**

(30) Priorität: 27.01.2022 DE 102022101846
(71) Anmelder: HELLA GMBH & CO. KGAA, 59552 Lippstadt (DE)
(72) Erfinder: KUHLMANN, Sascha, 59590 Geseke (DE); Maßmann, Clemens, 59555 Lippstadt (DE); Kuge, Matthias, 33104 Paderborn (DE); Budde, Oliver, 59597 Erwitte (DE); Berhorst, Jann, 33178 Borchen (DE)
(74) Vertreter: Bringemeier, Ulrich Heinz

(57) **Zusammenfassung**

Die Erfindung betrifft ein Fahrpedal mit einem Drehstellungssensor (11) und einem schwenkbaren Betätigungselement (3), das mit einem Rotor des Drehstellungssensors (11) gekoppelt ist, um den Rotor des Drehstellungssensors (11) gegenüber einem Stator des Drehstellungssensors (11) drehen zu können, wobei das Betätigungselement (3) des Fahrpedals um eine Drehachse, nachfolgend Betätigungsdrehachse genannt, drehbar gelagert ist, der Rotor des Drehstellungssensors (3) um eine Drehachse, nachfolgend Sensordrehachse genannt, drehbar gelagert ist, die Betätigungsdrehachse und die Sensordrehachse voneinander verschieden sind und zwischen dem Betätigungselement (3) und dem Rotor ein Getriebe vorgesehen ist, welches eine Drehung des Betätigungselementes (3) in eine Drehbewegung des Rotors umformt.

## Beschreibung

Die Erfindung betrifft ein Fahrpedal mit einem Drehstellungssensor und einem schwenkbaren Betätigungselement, das mit einem Rotor des Drehstellungssensors gekoppelt ist, um den Rotor des Drehstellungssensors gegenüber einem Stator des Drehstellungssensors drehen zu können.

Ein solches Fahrpedal kann dazu genutzt werden, eine Antriebsmaschine eines Kraftfahrzeugs zu steuern. Aus dem Dokument DE 10 2008 003 296 B4 ist ein Fahrpedal eingangs genannter Art bekannt. Der Drehstellungssensor erfasst die Stellung des Betätigungselementes und setzt diese in ein elektrisches Signal um, das einem Motorsteuergerät zugeführt wird, um die momentane Leistung des Motors einzustellen.

Der Rotor des Drehstellungssensors ist bei dem bekannten Fahrpedal an dem Betätigungselement befestigt. Der Rotor ist so befestigt, dass die Drehachse des Rotors und eine Drehachse des Betätigungselementes zusammenfallen. Die Bewegung des Betätigungselementes wird so unmittelbar auf den Sensor übertragen.

Bei der Betätigung eines Fahrpedals können insbesondere in Paniksituationen des Fahrers des mit dem Fahrpedal ausgestatteten Fahrzeugs sehr große Kräfte entstehen. Diese im normalen Fahrbetrieb nicht auftretenden Kräfte können so stark sein, dass sie zu einer Beschädigung des Fahrpedals, insbesondere zu einer Beschädigung des Betätigungselementes führen. Die Gefahr einer Beschädigung des Fahrpedals ist dabei um so größer, je größer die Stelle des Betätigungselementes, an der die Betätigungskraft zum Schwenken des Betätigungselementes in das Betätigungselement eingeleitet wird, von der Drehachse des Betätigungselementes entfernt ist. Je größer der Abstand der Krafteinleitungsstelle zur Drehachse, je größer ist das Drehmoment, das auf das Fahrpedal wirkt.

Die Erfinder haben sich dem Problem der möglichen Beschädigung des Fahrpedals bei großen Betätigungskräften gestellt.

Zur Lösung schlagen sie vor, das Fahrpedal so zu gestalten, dass
- das Betätigungselement des Fahrpedals um eine Drehachse, nachfolgend Betätigungsdrehachse genannt, drehbar gelagert ist,
- der Rotor des Drehstellungssensors um eine Drehachse, nachfolgend Sensordrehachse genannt, drehbar gelagert ist,
- die Betätigungsdrehachse und die Sensordrehachse voneinander verschieden sind und
- zwischen dem Betätigungselement und dem Rotor ein Getriebe vorgesehen ist, welches eine Drehung des Betätigungselementes in eine Drehbewegung des Rotors umformt.

Bei einem erfindungsgemäßen Fahrpedal wird die Bewegung des Betätigungselementes nicht unmittelbar auf den Rotor übertragen. Erfindungsgemäß ist ein Getriebe vorgesehen, welches eine Umformung der Drehbewegung des Betätigungselementes in eine Drehbewegung des Rotors umformt. Die Umformung kann mit einer Änderung eines Teils von Bewegungsgrößen der Drehbewegung des Betätigungselementes oder aller Bewegungsgrößen der Drehbewegung des Betätigungselementes in Bewegungsgrößen der Drehbewegung des Rotors einhergehen. Mit dem Getriebe ist es daher möglich, Kräfte, die zu einer Beschädigung zum Beispiel von sicherheitsrelevanten Teilen des Fahrpedals führen könnten, so herabzusetzen, dass diese keinen Schaden anrichten können.

Das Getriebe kann wenigstens ein Zahnrad und/oder einen Hebel aufweisen. In einer bevorzugten Ausführung kann das Getriebe einen ersten Hebel aufweisen, der drehfest mit dem Betätigungselement verbunden ist, so dass dieser mit dem Betätigungselement um die Betätigungsdrehachse drehbar ist. Ferner kann das Getriebe eines erfindungsgemäßen Fahrpedals einen zweiten Hebel aufweisen, der um die Sensordrehachse drehbar ist und auf, an oder in dem zweiten Hebel der Rotoren des Drehstellungsensors um die Sensordrehachse drehbar befestigt ist. Der erste Hebel und der zweite Hebel können in einem Eingriff miteinander stehen, so dass zumindest eine Drehbewegung des ersten Hebels in eine erste Richtung in eine Drehbewegung des zweiten Hebels übersetzt werden kann. Die Drehbewegung des ersten Hebels wie auch des zweiten Hebels kann begrenzt sein. Es ist also nicht notwendig, dass einer der beiden Hebel eine vollständige Drehung vollziehen kann.

Besonders einfach aber keinesfalls notwendig ist es, wenn die Sensordrehachse und die Betätigungsdrehachse parallel zueinander sind. Der erste Hebel und der zweite Hebel können jeweils Kontaktflächen aufweisen, an denen die beiden Hebel während der Übersetzung der Drehbewegung zueinander Kontakt haben und über die während der Übersetzung der Drehbewegung ein Drehmoment oder eine Kraft von dem ersten Hebel in den zweiten Hebel übertragbar ist.

Ein erfindungsgemäßes Fahrpedal kann einen Anschlag aufweisen, an dem der zweite Hebel anschlägt, wenn der Drehstellungssensor eine maximale Drehstellung erfasst. Durch den Anschlag kann verhindert werden, dass der Rotor gegenüber dem Stator mehr gedreht wird, als es zur Erfassung der Stellung des Betätigungselementes notwendig ist. Durch den Anschlag kann auch verhindert werden, dass durch eine übermäßige Betätigung des Fahrpedals ein Schaden entsteht.

Der Anschlag kann dabei so angeordnet sein, dass eine Kraft, die von dem ersten Hebel beim Erreichen der maximalen Drehstellung des Drehstellungssensors in den zweiten Hebel eingeleitet wird, in den Anschlag aufgenommen werden kann, ohne dass dabei auf den zweiten Hebel ein Drehmoment ausgeübt wird oder auf den zweiten Hebel ein Drehmoment ausgeübt wird, welches zu einer Beschädigung des zweiten Hebels führt. Die von dem ersten Hebel in den zweiten Hebel eingeleitete Kraft kann dadurch in den Anschlag abgeleitet werden, ohne dass am zweiten Hebel ein Schaden entsteht.

Das Betätigungselement und der erste Hebel können eine Einheit bilden, die ein Drehachsenelement aufweisen. Dieses Drehachsenelement kann in einem Stück mit dem Betätigungselement gebildet oder drehfest mit dem Betätigungselement verbunden sein. Ferner kann es drehfest mit dem ersten Hebel verbunden sein.

Das Betätigungselement oder das Betätigungselement und das Drehachsenelement können austauschbar sein. Das ist nicht nur nützlich, wenn aufgrund einer zu großen Krafteinwirkung bei der Betätigung des Fahrpedals das Betätigungselement oder das Drehachsenelement beschädigt wird und ausgetauscht werden muss. Das ist auch von Vorteil, wenn man Fahrpedale mit verschiedenen Betätigungselementen oder Drehachsenelementen für verschiedene Anwendungen benötigt. Durch die Auswahl eines geeigneten Betätigungselementes und/oder Drehachsenelementes aus verschiedenen Betätigungselementen und/oder Drehachsenelementen können ohne vollständige Neukonstruktion auf einfache Weise verschiedenen Fahrpedale erhalten werden.

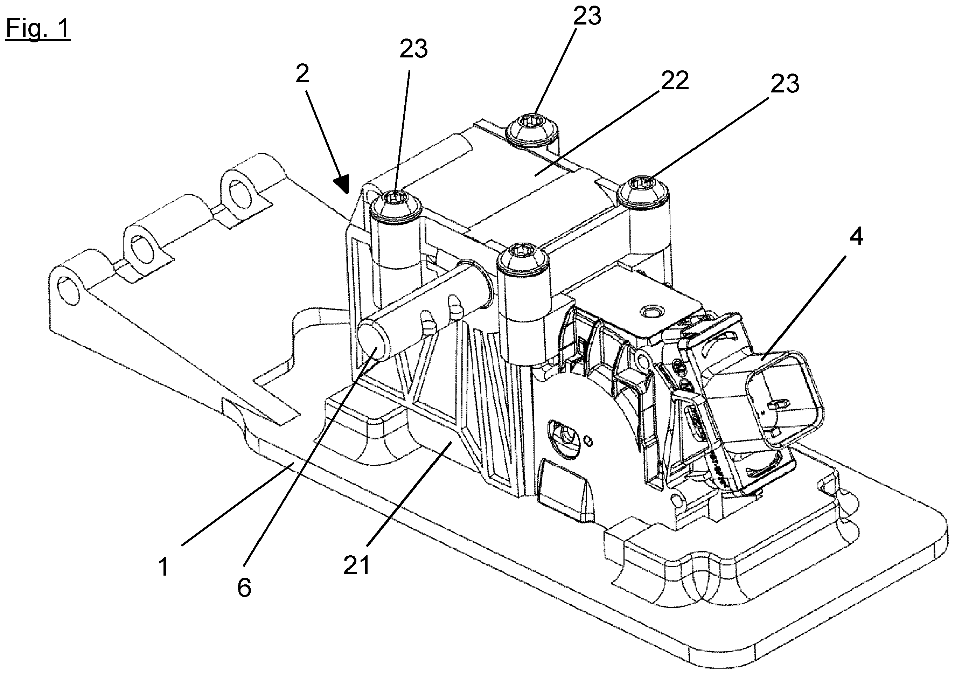

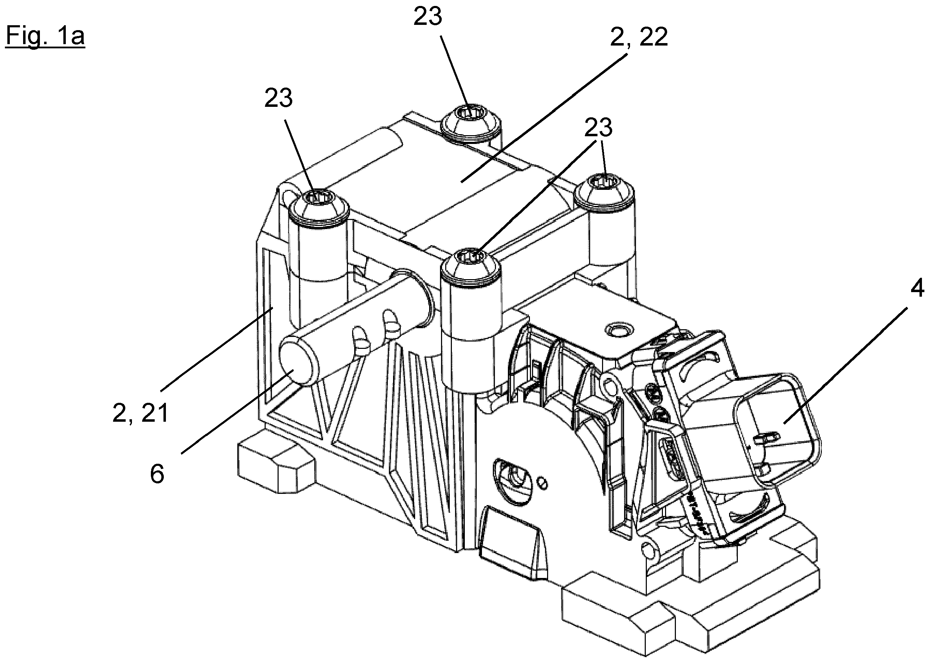

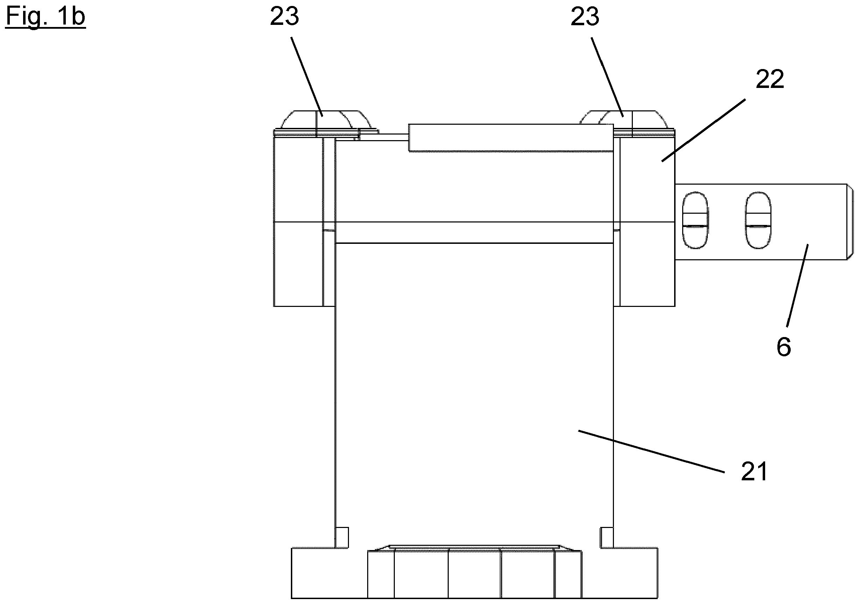

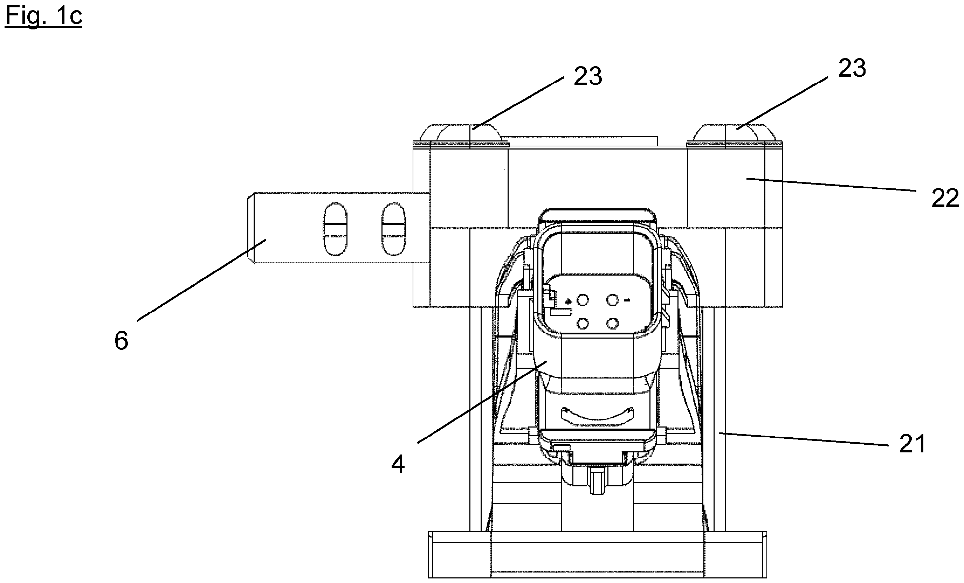

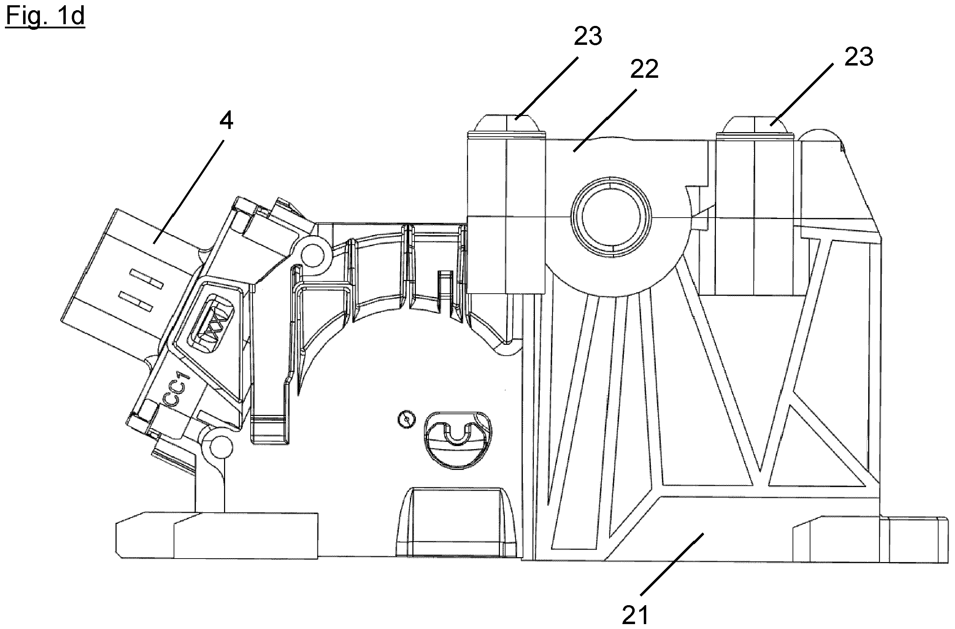

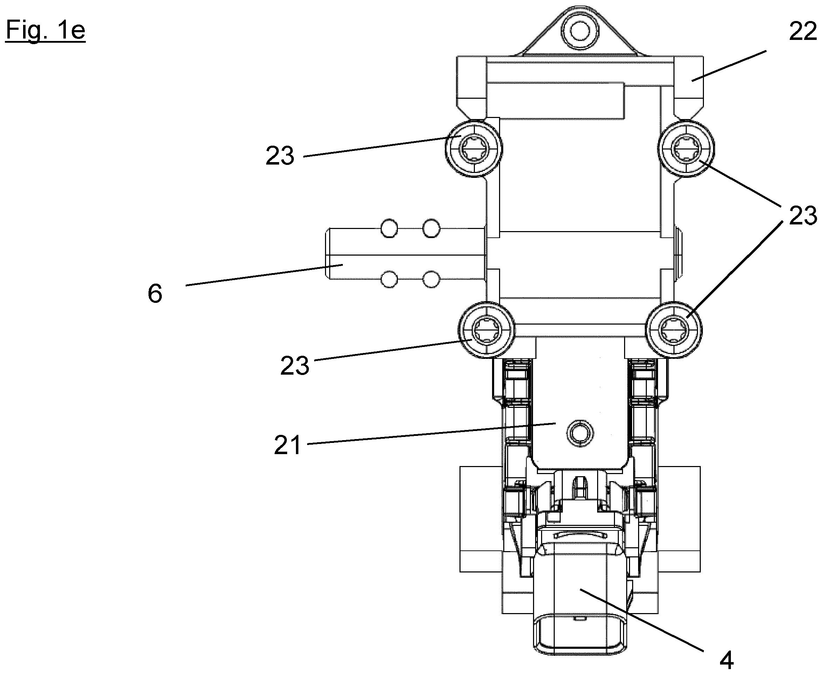

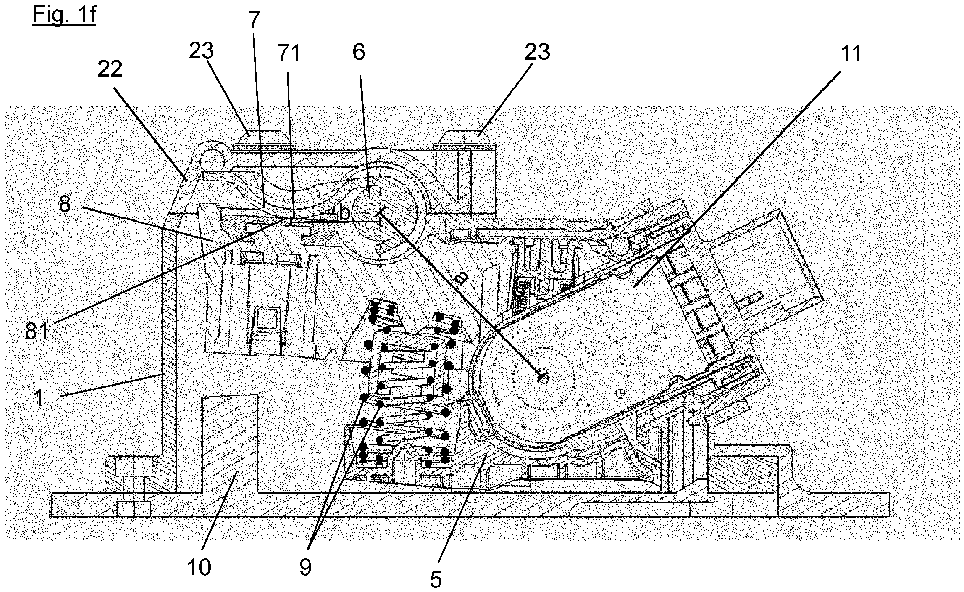

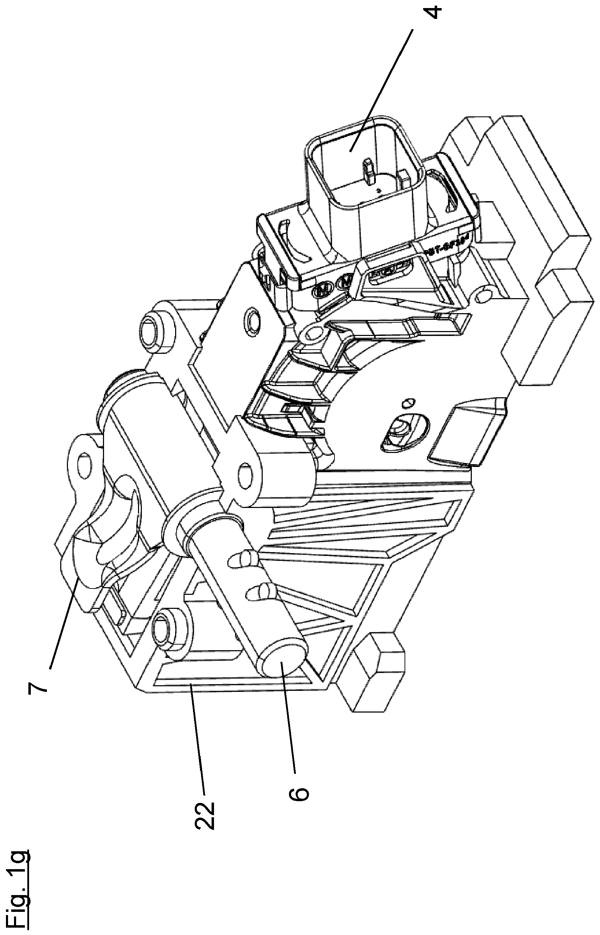

Ausführungsbeispiele für ein erfindungsgemäßes Fahrpedal sind in den Zeichnungen dargestellt. Es zeigt
- Fig. 1: ein erstes Ausführungsbeispiel in perspektivischer Darstellung,
- Fig. 1a: das erste Ausführungsbeispiel aus der gleichen Perspektive jedoch ohne Unterteil,
- Fig. 1b: eine Ansicht des ersten Ausführungsbeispiels ohne Unterteil von vorne,
- Fig. 1c: eine Ansicht des ersten Ausführungsbeispiels ohne Unterteil von hinten,
- Fig. 1d: eine Ansicht des ersten Ausführungsbeispiels ohne Unterteil von einer ersten Seite,
- Fig. 1e: eine Draufsicht auf das erste Ausführungsbeispiel ohne Unterteil,
- Fig. 1f: einen Schnitt durch das erste Ausführungsbeispiel ohne Unterteil,
- Fig. 1g: eine Ansicht aus der Perspektive der Figuren 1 und 1a, jedoch ohne Unterteil und obere Gehäuseschale und Befestigungsschrauben zur Befestigung der oberen Gehäuseschale an der unteren Gehäuseschale,

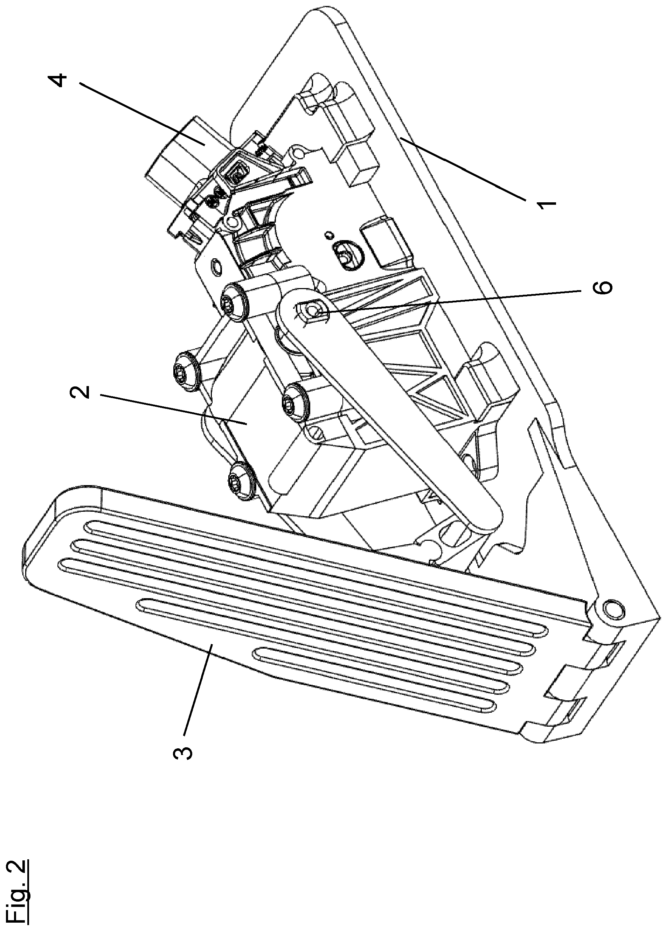

- Fig. 2: eine erste Variante des ersten Ausführungsbeispiels in perspektivischer Darstellung,

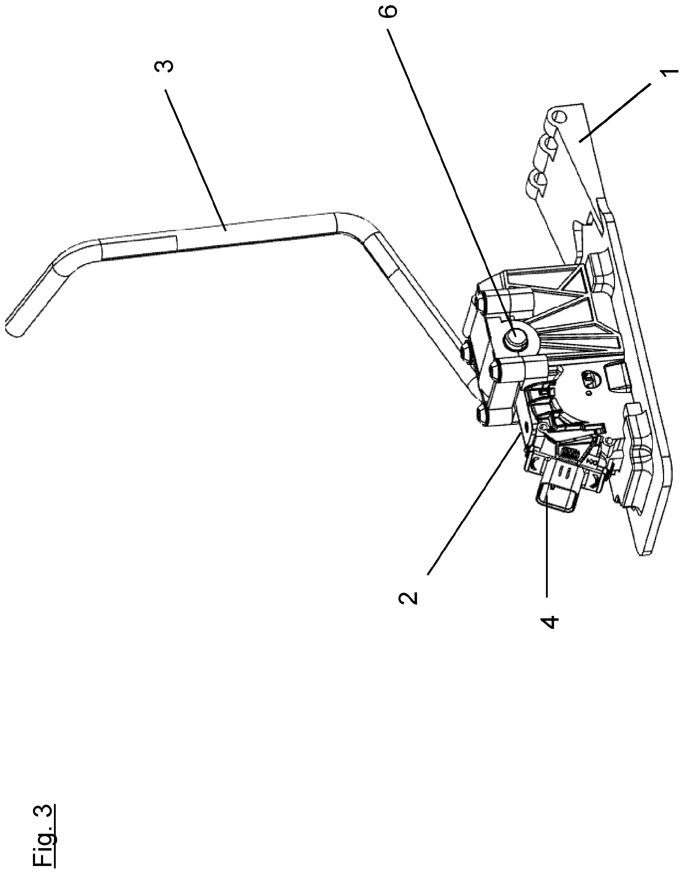

- Fig. 3: eine zweite Variante des ersten Ausführungsbeispiels in perspektivischer Darstellung,

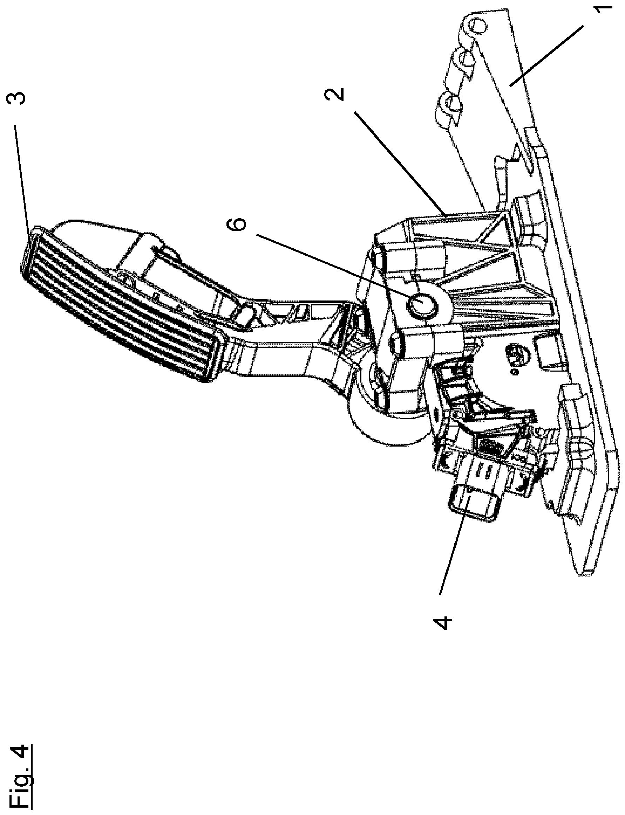

- Fig. 4: eine dritte Variante des ersten Ausführungsbeispiels in perspektivischer Darstellung,

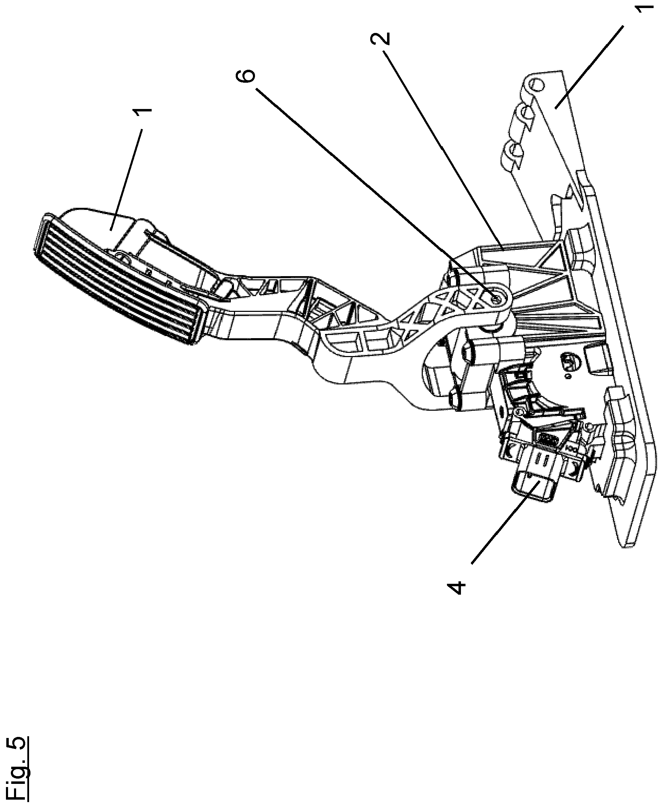

- Fig. 5: eine vierte Variante des ersten Ausführungsbeispiels in perspektivischer Darstellung,

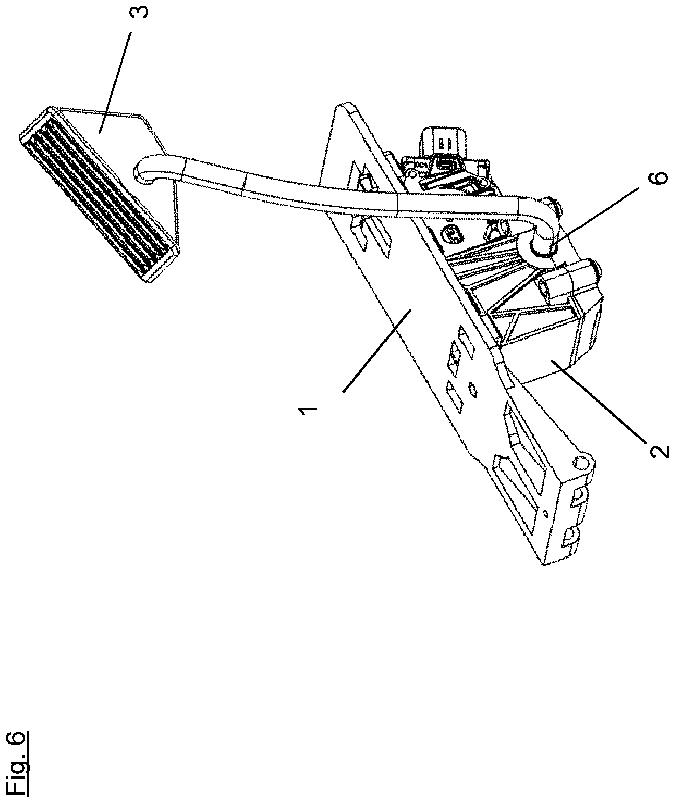

- Fig. 6: eine fünfte Variante des ersten Ausführungsbeispiels in perspektivischer Darstellung,
- Fig. 7: ein zweites Ausführungsbeispiel in perspektivischer Darstellung ohne Betätigungselement.

Die in den Figuren dargestellten Ausführungsbeispiele für erfindungsgemäße Fahrpedale gehen auf ein früheres Fahrpedal zurück, das in dem Dokument DE 10 2008 003 296 B4 offenbart ist. Die Ausführungsbeispiele weisen eine Vielzahl von funktional gleichen Elementen auf. Zunächst wird das erste Ausführungsbeispiel erläutert, anschließend wird auf die Unterschiede zwischen den Varianten des ersten Ausführungsbeispiels eingegangen bevor dann die Unterschiede zwischen dem ersten Ausführungsbeispiel und dem zweiten Ausführungsbeispiel erläutert werden.

Die Ausführungsbeispiele weisen ein Unterteil 1 und ein Gehäuse 2 auf. Die meisten übrigen Elemente des Fahrpedals sind in oder an dem Gehäuse angeordnet. Sie weisen ein Betätigungselement 3 auf, das drehbar in dem Gehäuse 2 gelagert ist und welches aus dem Gehäuse 2 herausragt. Lediglich beim ersten Ausführungsbeispiel ist das Betätigungselement nicht dargestellt.

Die Ausführungsbeispiele weisen ferner eine Buchse 4 für eine elektrische Steckverbindung auf, welche in eine Ausnehmung in dem Gehäuse 2 eingesetzt ist und das Gehäuse 2 durchragt.

In dem Gehäuse 2 ist eine Wippe 5 um eine Drehachse drehbar angeordnet. Diese Wippe 5 kann nur eine Bewegung um wenige Grad vollziehen. Diese Wippe hat für die vorliegende Erfindung allenfalls eine untergeordnete Bedeutung. Eine solche Wippe an sich ist in früheren Anmeldungen der Anmelderin, zum Beispiel in der DE 10 2008 003 296 B4 näher beschrieben. An dem Gehäuse 2 ist ein Stator eines Drehstellungssensors 11 des Fahrpedals befestigt. Er ist in der Buchse 4 eingerastet und mit einer Tülle abgedichtet. Der Sensor 11 hat eine Achse, die mit der Drehachse der Wippe zusammenfällt. Diese Drehachse wird im weiteren als Sensordrehachse genannt. Drehungen eines Rotors um diese Achse können von dem Sensor 11 erfasst werden. Diese Drehungen werden in ein elektrisches Signal gewandelt. Der Sensor 11 ist mit Kontakten der Buchse verbunden. An der Buchse kann das elektrische Signal des Senors 11 abgegriffen werden.

Das Gehäuse 2 bildet ein Lager für eine Einheit aus dem Betätigungselement 3, einem Drehachsenelement 6 und einem ersten Hebel 7. Das Betätigungselement 2 und der erste Hebel 7 sind drehfest mit dem Drehachsenelement 6 verbunden. Es ist das Drehachsenelement dieser Einheit, das in dem von dem Gehäuse 2 gebildeten Lager drehbar gelagert ist. Die Drehachse dieses Lagers wird als Betätigungsdrehachse bezeichnet, weil sich das Betätigungselement 3 um diese Drehachse dreht.

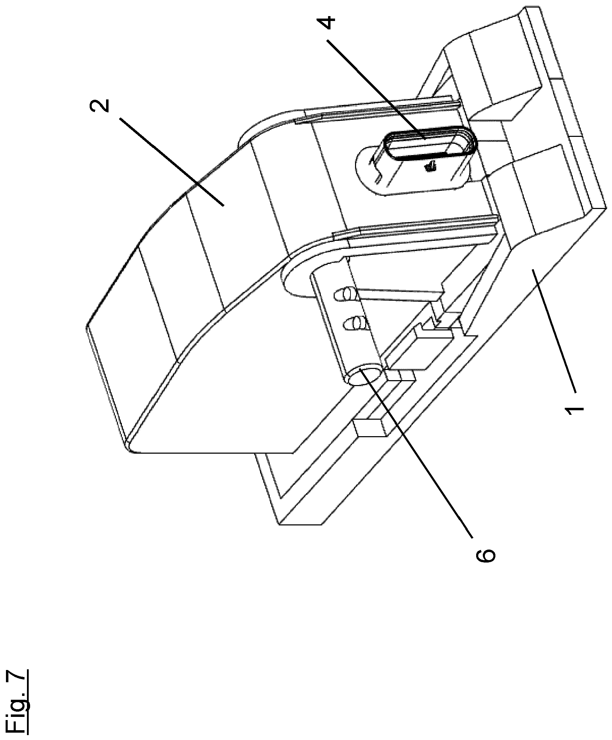

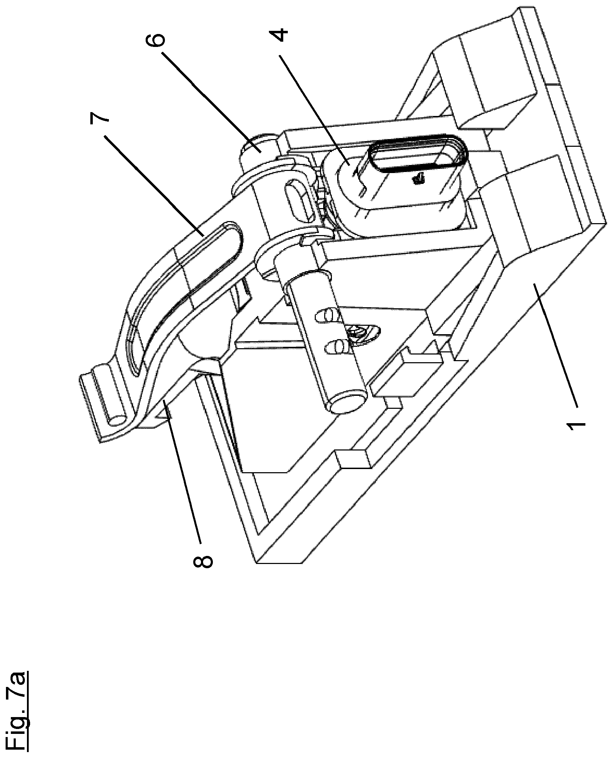

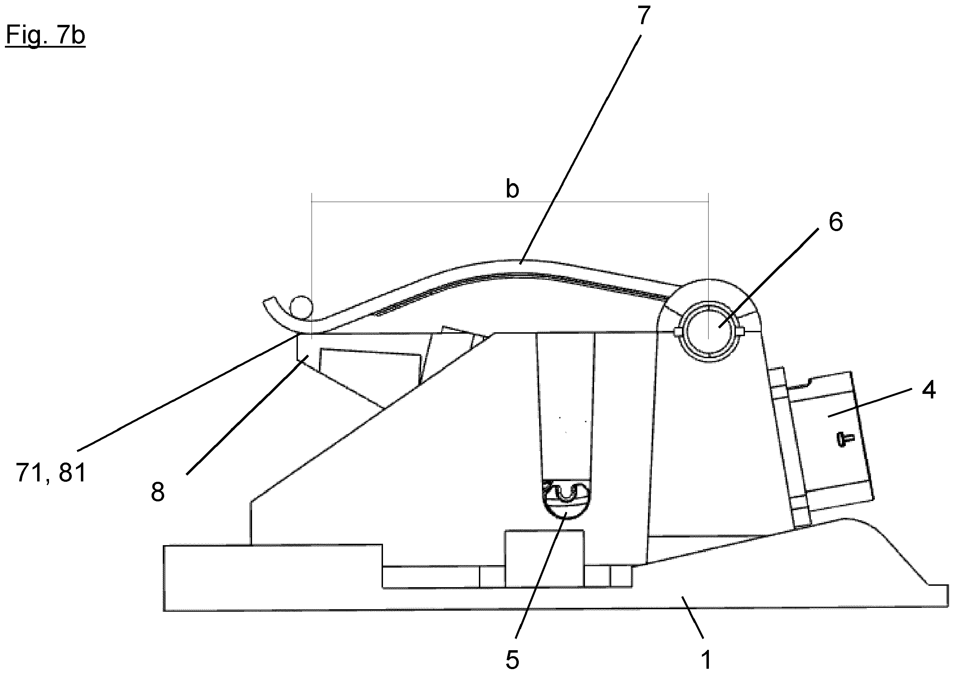

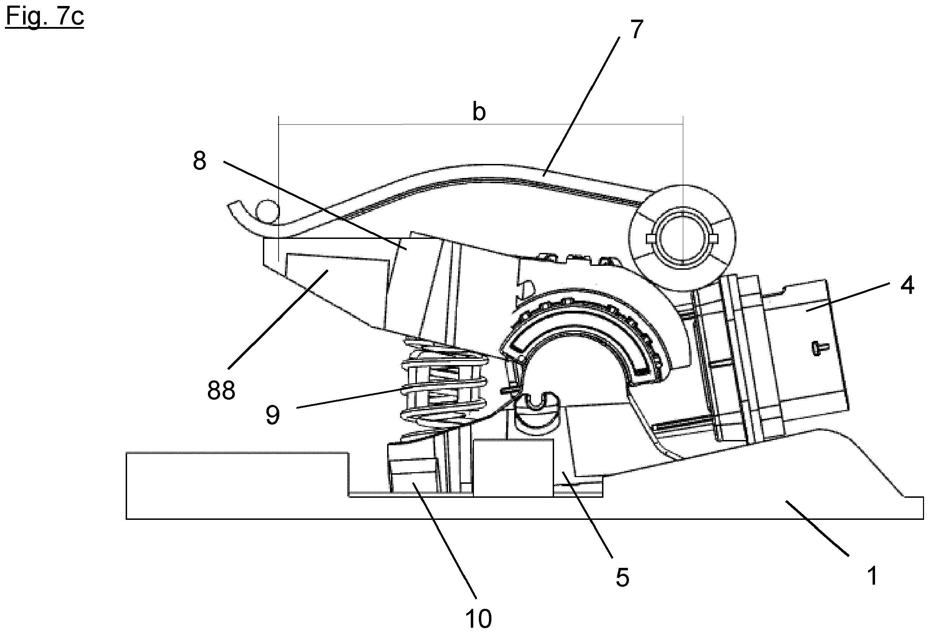

Die Wippe 5 bildet zusammen mit dem Gehäuse ein Lager für einen zweiten Hebel 8. Die Wippe 5 bildet eine untere kreisbogenfömige Lagerschale und das Gehäuse eine obere kreisbogenförmige Halbschale. In dem Lager sind kreisbogenförmige Reiblagerelemente angeordnet. Die Drehachse dieses Lagers für den zweiten Hebel fällt mit der Sensordrehachse zusammen. An dem zweiten Hebel 8 ist ein Rotor des Sensors befestigt. Dies ist in Fig. 7c dargestellt.

Zwischen der Wippe 5 und dem zweiten Hebel 8 sind eine oder mehrere Rückstellfedern 9 angeordnet, mit denen der zweite Hebel 8 nach einer Drehbewegung in eine Ausgangsstellung bewegt werden kann.

Die Sensorachse und die Betätigungsachse liegen mit Abstand a parallel zu einander. Der erste Hebel 7 und der zweite Hebel 8 sind so zueinander angeordnet, dass sie miteinander in Eingriff stehen: Bei einer Drehung des ersten Hebels 7 wird der zweite Hebel 8 mitgenommen und ebenfalls bewegt. Dazu haben der erste Hebel 7 und der zweite Hebel 8 Kontaktflächen 71, 81. Der erste Hebel 7 liegt mit seiner Kontaktfläche 71 an der Kontaktfläche 81 des zweiten Hebels 8 an und umgekehrt. Über den an diesen Kontaktflächen 71, 81 hergestellten Kontakt zwischen dem ersten Hebel 7 und dem zweiten Hebel 8 können Kräfte von dem ersten Hebel 7 auf den zweiten Hebel 8 und von dem zweiten Hebel 8 auf den ersten Hebel 7 übertragen werden.

Der erste Hebel 7 wird aus einer Ausgangslage in eine erste Richtung gedreht, wenn ein Benutzer des Fahrpedals in das Betätigungselement 3 eine Kraft einleitet. Diese Kraft wird auf den ersten Hebel 7 übertragen. Von dort kann sie dann in den zweiten Hebel eingeleitet werden. Die Größe der in den zweiten Hebel 8 übertragenen Kraft bestimmt sich aus der Entfernung des Punktes, an dem der Benutzer die Kraft in das Betätigungselement 3 einleitet, von der Betätigungsachse und der Entfernung des Punktes oder der Fläche, an dem der Kontakt zwischen dem ersten Hebel 7 und dem zweiten Hebel 8 hergestellt ist, von der Betätigungsachse.

Der erste Hebel 7 wird in die entgegengesetzte Richtung gedreht, wenn der Benutzer die Kraft von dem Betätigungshebel 3 wegnimmt und die Feder 9, den zweiten Hebel 8 in seine Ausgangslage zurückdrücken. Die von den Federn 9 in den zweiten Hebel 8 eingeleitete Kraft wird auf den ersten Hebel 7 übertragen, wodurch der Betätigungshebel ebenfalls in seine Ausgangslage gedrückt wird.

Insbesondere durch die Wahl der Länge des ersten Hebels 7 bzw. des Abstands b zwischen der Betätigungsachse und der Kontaktfläche des ersten Hebels im Verhältnis zur Länge des Betätigungselementes kann die Größe der von dem ersten Hebel 7 in den zweiten Hebel 8 bestimmt werden. Durch Vergrößern des Abstands b zwischen der Betätigungsachse und der Kontaktfläche des ersten Hebels 7 kann die von dem ersten Hebel 7 in den zweiten Hebel 8 eingeleitet Kraft bei gleicher Betätigungskraft am Betätigungselement 3 verringert werden.

Ferner ist ein Anschlagelement 10 für den zweiten Hebel 8 vorgesehen. Diese begrenzt die Bewegung des zweiten Hebels und auch des damit verbundenen Rotors relativ zum Stator. Das Anschlagelement ist an dem Unterteil 1 vorgesehen. Das Anschlagelement ist so angeordnet, dass eine Kraft, die über den ersten Hebel 7 in den zweiten Hebel 8 eingeleitet wird, von dem Anschlagelement 10 aufgenommen werden kann. Das Anschlagelement 10 ist dazu möglichst in Richtung der Kraft, die in den zweiten Hebel 8 eingeleitet wird, auf der dem ersten Hebel 7 gegenüberliegenden Seite des zweiten Hebels 8 angeordnet. Wenn der zweite Hebel 8 an dem Anschlag anschlägt, kann die weiter in den zweiten Hebel 8 eingeleitete Kraft direkt in das Anschlagelement 10 abgeleitet werden, ohne dass dazu Momente in dem zweite Hebel 8 entstehen, die den zweiten Hebel 8 oder das Lager des zweiten Hebels 8 beanspruchen.

Bei dem ersten Ausführungsbeispiel ist das Gehäuse 2 zweiteilig ausgeführt und weist eine untere Gehäuseschale 21 und eine obere Gehäuseschale 22 auf, die über Schrauben 23 miteinander verbunden werden können. Das Drehachsenelement 6 ist zwischen diesen beiden Gehäuseschalen 21, 22 eingesetzt. Diese weisen für das Drehachsenelement 6 halbkreisförmige Ausnehmungen auf.

Das Fahrpedal kann ein Kickdown-Element aufweisen, welches insbesondere bei Fahrzeugen mit Automatikgetriebe eine schnelle Beschleunigung des Fahrzeugs ermöglicht, wenn das Fahrpedal schnell und stark betätigt wird. Das Kickdown-Element kann an in einem Schacht 88 an dem zweiten Hebel 8 eingerastet sein und wird betätigt, wenn das Fahrpedal durchgetreten wird.

### Bezugszeichenliste

- 1: Unterteil
- 2: Gehäuse
- 21: untere Gehäuseschale
- 22: obere Gehäuseschale
- 23: Schrauben
- 3: Betätigungselement
- 4: Buchse
- 5: Wippe
- 6: Drehachsenelement
- 7: erster Hebel
- 71: Kontaktfläche
- 8: zweiter Hebel 8
- 81: Kontaktfläche
- 88: Schacht für Kickdown-Element
- 9: Rückstellfedern
- 10: Anschlagelement
- 11: Drehstellungssensor

## Patentansprüche

1. Fahrpedal mit einem Drehstellungssensor (11) und einem schwenkbaren Betätigungselement (3), das mit einem Rotor des Drehstellungssensors (11) gekoppelt ist, um den Rotor des Drehstellungssensors (11) gegenüber einem Stator des Drehstellungssensors (11) drehen zu können,
**dadurch gekennzeichnet, dass**
das Betätigungselement (3) des Fahrpedals um eine Drehachse, nachfolgend Betätigungsdrehachse genannt, drehbar gelagert ist,
der Rotor des Drehstellungssensors (3) um eine Drehachse, nachfolgend Sensordrehachse genannt, drehbar gelagert ist,
die Betätigungsdrehachse und die Sensordrehachse voneinander verschieden sind und
zwischen dem Betätigungselement (3) und dem Rotor ein Getriebe vorgesehen ist, welches eine Drehung des Betätigungselementes (3) in eine Drehbewegung des Rotors umformt.

2. Fahrpedal nach Anspruch 1, **dadurch gekennzeichnet, dass** das Getriebe wenigstens ein Zahnrad aufweist.

3. Fahrpedal nach Anspruch 1, **dadurch gekennzeichnet, dass** das Getriebe wenigstens einen Hebel (7, 8) aufweist.

4. Fahrpedal nach Anspruch 3, **dadurch gekennzeichnet, dass** das Getriebe einen ersten Hebel (7) aufweist, der drehfest mit dem Betätigungselement (3) verbunden ist, so dass dieser mit dem Betätigungselement (3) um die Betätigungsdrehachse drehbar ist.

5. Fahrpedal nach Anspruch 3 oder 4, **dadurch gekennzeichnet, dass** das Getriebe einen zweiten Hebel (8) aufweist, der um die Sensordrehachse drehbar ist und auf, an oder in dem zweiten Hebel (8) des Rotors des Drehstellungsensors (11) um die Sensordrehachse drehbar befestigt ist.

6. Fahrpedal nach Anspruch 4 und 5, **dadurch gekennzeichnet, dass** der erste Hebel (7) und der zweite Hebel (8) in einem Eingriff miteinander stehen, so dass zumindest eine Drehbewegung des ersten Hebels (7) in eine erste Richtung in eine Drehbewegung des zweiten Hebels (8) übersetzbar ist.

7. Fahrpedal nach Anspruch 6, **dadurch gekennzeichnet, dass** die Sensordrehachse und die Betätigungsdrehachse parallel zueinander sind und dass der erste Hebel (7) und der zweite Hebel (8) jeweils Kontaktflächen (71, 81) aufweisen, an denen die beiden Hebel (7, 8) während der Übersetzung der Drehbewegung zueinander Kontakt haben und über die während der Übersetzung der Drehbewegung ein Drehmoment von dem ersten Hebel (7) in den zweiten Hebel (8) übertragbar ist.

8. Fahrpedal nach Anspruch 7, **dadurch gekennzeichnet, dass** das Fahrpedal einen Anschlag (10) aufweist, an dem der zweite Hebel (8) anschlägt, wenn der Drehstellungssensor (11) eine maximale Drehstellung erfasst, wobei der Anschlag (10) so angeordnet ist, dass eine Kraft, die von dem ersten Hebel (7) beim Erreichen der maximalen Drehstellung des Drehstellungssensors (11) in den zweiten Hebel (8) eingeleitet wird, in den Anschlag (10) aufgenommen werden kann, ohne dass dabei auf den zweiten Hebel (8) ein Drehmoment ausgeübt wird oder auf den zweiten Hebel (8) ein Drehmoment ausgeübt wird, welches zu einer Beschädigung des zweiten Hebel (8) führt.

9. Fahrpedal nach einem der Ansprüche 4 bis 8, **dadurch gekennzeichnet, dass** das Betätigungselement (3) und der erste Hebel (7) eine Einheit bilden, die ein Drehachsenelement (6) aufweist, das in einem Stück mit dem Betätigungselement (3) gebildet ist oder drehfest mit dem Betätigungselement verbunden ist und das drehfest mit dem ersten Hebel (7) verbunden ist.

10. Fahrpedal nach Anspruch 10, **dadurch gekennzeichnet, dass** das Betätigungselement (3) austauschbar ist.
